Europäisches Patentamt

European Patent Office

Office européen des brevets

(19)

(11) Veröffentlichungsnummer: **0 073 310**
A1

# (12) EUROPÄISCHE PATENTANMELDUNG

(21) Anmeldenummer: 82105368.3

(22) Anmeldetag: 18.06.82

(51) Int. Cl.³: **G 02 B 7/26, H 04 J 15/00**

(30) Priorität: 22.08.81 DE 3133252

(43) Veröffentlichungstag der Anmeldung: 09.03.83
Patentblatt 83/10

(84) Benannte Vertragsstaaten: **BE DE FR GB IT NL**

(71) Anmelder: **Licentia Patent-Verwaltungs-GmbH, Theodor-Stern-Kai 1, D-6000 Frankfurt/Main 70 (DE)**

(72) Erfinder: **Unger, Hans-Georg, Prof.Dr.-Ing., Wöhler Strasse 10, D-3300 Braunschweig (DE)**

(74) Vertreter: **Schickle, Gerhard, Dipl.-Ing. et al, Licentia Patent-Verwaltungs-GmbH Theodor-Stern-Kai 1, D-6000 Frankfurt/Main 70 (DE)**

(54) Wellenlängen-Multiplexer oder -Demultiplexer.

(57) Die Erfindung betrifft einen Wellenlängen-Multiplexer oder -Demultiplexer für Lichtleitfasern. Bei der Anordnung ist eine eingangsseitige Monomod-Lichtleitfaser mit einem Filmwellenleiter gekoppelt. Dieser besitzt ein stark dispersiv ausgebildetes, zwischen zwei linsenförmigen Bereichen eingefügtes Filmwellenleiter-Dreieck. Die gewünschten, räumlich getrennten Datenkanäle können an ausgangsseitigen Wellenleitern abgenommen werden.

- 1 -

Licentia Patent-Verwaltungs-GmbH          Z13 PTL-BK/Sch/ma
Theodor-Stern-Kai 1                        BK 81/75

D-6000 Frankfurt 70

## Wellenlängen-Multiplexer oder -Demultiplexer

Die Erfindung hat sich die Aufgabe gestellt, einen einfach herstellbaren Multiplexer in planarer Technik aufzuzeigen, der zum Anschluß an Monomode-Lichtleitfasern geeignet ist.

Gelöst wird diese Aufgabe durch die im Hauptanspruch angegebenen Merkmale.

Weitere Ausgestaltungen der Erfindung sind durch die Merkmale der Unteransprüche beschrieben.

Anhand eines Ausführungsbeispiels soll im folgenden die Erfindung näher erläutert werden.

Durch die Einführung der optischen Nachrichtenübertragung mittels Glasfasern können im Wellenlängen-Multiplex sehr viele optische Kanäle simultan übertragen werden. Im Eingang und Ausgang derartiger Faserstrecken benötigt man für die Einspeisung bzw. Trennung Wellenlängen-Multiplexer bzw. Wellenlängen-Demultiplexer. Besonderes Interesse besteht an Multiplexern bzw. Demultiplexern für Monomode-Lichtleitfasern, die nur eine Welle, und zwar normalerweise die Grundwelle der Lichtleitfaser, übertragen.

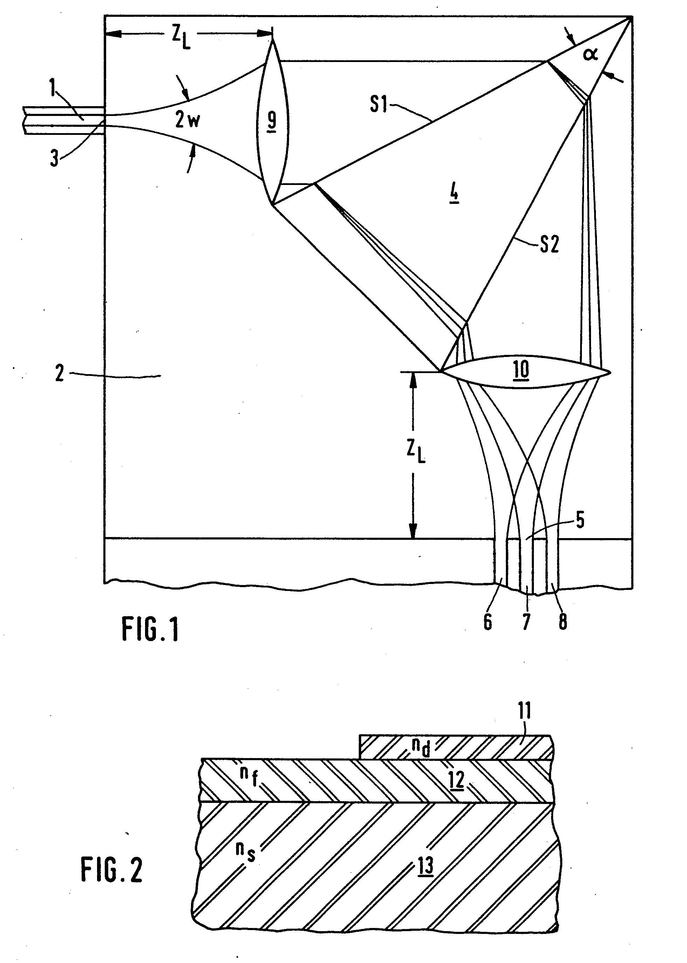

In der Fig. 1 ist eine planare Ausführungsform eines solchen
Multiplexers dargestellt. Mit 1 ist eine Monomode-Lichtleitfaser bezeichnet, über welche der Datenfluß übertragen wird.
Sie stößt mit ihrem Ausgangsquerschnitt direkt auf einen
einwelligen Filmwellenleiter 2, um in ihm die Grundwelle anzuregen. Der Filmwellenleiter besteht aus einem Substrat 13,
auf welchem ein geeignet dimensionierter Film 12 aufgebracht
ist. In der Filmebene 3 senkrecht zur angekoppelten Faser hat
die Filmgrundwelle anfangs die gleiche Intensitätsverteilung
wie die Fasergrundwelle. Diese nahezu Gaußsche Feld- und
Intensitätsverteilung weitet sich im weiteren Verlauf der
Filmgrundwelle im Film aufgrund der dispergierenden Wirkung
der elektromagnetischen Beugung auf, wie dies anhand der
Fig. 1 über die Strecke $z_L$ dargestellt ist. Die speziellen
Begrenzungslinien deuten die Fleckgröße der Gaußschen Strahlwelle an, welche die Filmgrundwelle in der Ebene des Filmwellenleiters 2 bildet. Die Gaußsche Strahlwelle hat ihre
Taille mit der minimalen Fleckgröße $w_o$ am Faserausgang. Sie
weitet sich im Abstand z vom Faserausgang auf

$$w = \left\{ w_o{}^2 + \left[ 2z/(w_o \beta) \right]^2 \right\}^{1/2}$$

auf, mit ß als Phasenkonstante der Filmgrundwelle. Dabei
krümmt sich ihre Phasenfront zu einem Kreiszylinder mit dem
Krümmungsradius

$$R = z + w_o{}^4 \beta^2/(4z).$$

Im Abstand $z_L$ von der Ankoppelebene 3 ist der Filmwellenleiter 2 in seinem linsenförmigen Bereich 9, der in der
Fig. 5 schematisch dargestellt ist, auf eine Dicke $d_L$ verstärkt. Dadurch erhöht sich in diesem Bereich die Phasenkonstante ß der Filmgrundwelle. Die Gaußsche Strahlwelle,
als welche die Filmgrundwelle hier einfällt, wird durch die
Phasentransformation in dem genannten linsenförmigen Wellenleiterbereich 9 in eine Gaußsche Strahlwelle mit wesentlich erhöhter Fleckgröße in ihrer Strahltaille transformiert.

Die aus dem linsenförmigen Bereich 9 austretende Welle ist
schwach konvergent. Sie gelangt zu dem einen Schenkel S1
eines Filmwellenleiter-Dreiecks 4 mit seinem Öffnungswinkel $\alpha$ . Dieser Filmwellenleiter ist so modifiziert, daß in
ihm die Filmgrundwelle eine höhere oder kleinere Phasenkonstante ß hat und daß das Produkt dieser Phasenkonstante
ß und der Lichtwellenlänge $\lambda$ im Vakuum sich mit der Lichtwellenlänge stark ändert. Einen derart stark dispersiven
Filmwellenleiter erhält man dadurch, daß man in dem eigentlichen Film 12 einen relativ dünnen weiteren Film 11 aufbringt. Die gleiche dispersive Wirkung kann man auch dadurch erreichen, daß im Filmwellenleiter-Dreieck 4 die Filmschicht 12 durch teilweises Abtragen verdünnt wird oder in
diesem Bereich von vornherein nicht bis zur vollen Stärke
$d_f$ aufgetragen wird. Mit einer Brechzahl $n_d$, die höher ist
als die Brechzahl $n_f$ des eigentlichen Films 12.

In der Fig. 2 ist dies im Schnitt dargestellt. Dabei ist mit
13 das Substrat bezeichnet, auf welchem der Film 12 aufgebracht ist. Die Brechzahl des Substrats 13 ist mit $n_s$ bezeichnet. Die von der angekoppelten Faser 1 ausgehende Welle
tritt über den Schenkel S1 in das Filmwellenleiter-Dreieck 4
ein, um auf der Schenkelseite 2 nach entsprechender Aufspreizung wieder auszutreten. Bei der dargestellten Anordnung wird
die Welle beim Durchschreiten des Films 3, 4 erneut im gleichen Sinne weiter umgelenkt. Das heißt, wenn der Filmgrundwelle mehrere Signale mit verschiedenen Vakuumwellenlängen
$\lambda$ ankommen, werden sie am Übergang zum Filmdreieck 4 verschieden stark umgelenkt und wandern in etwas verschiedenen
Richtungen im Filmdreieck 4 weiter. Sie erreichen dann auch
den anderen Schenkel S2 des Filmdreiecks 4 unter etwas verschiedenen Winkeln. Sie gelangt danach zu einem weiteren linsenförmigen Bereich 10. Dieser Filmbereich 10 hat die gleiche
Form wie der eingangsseitige linsenförmige Bereich 9. Der
linsenförmige Bereich 10 transformiert die Phasenkonstante
der einfallenden Filmwelle mit ihren nach wie vor Gaußschen
Feld- und Intensitätsverteilungen in Kreiszylinderflächen

0073310

BK 81/75

mit einem solchen Radius, daß sie wieder im gleichen Abstand
$z_L$ zu Strahltaillen komprimiert werden. Aufgrund des etwas
verschiedenen Einfallwinkels sind diese nunmehr gegeneinander
verschoben. An derjenigen Stelle, wo für das jeweilige Signal
bei einer der verschiedenen Vakuumlängen die Strahltaille
komprimiert wird, befindet sich die Stirnfläche einer der
optischen Wellenleiter 6, 7, 8, mit welchen die nunmehr getrennten Kanäle ausgefiltert werden können. Auch hierbei
wird das Brechzahlprofil der genannten optischen Wellenleiter (planarer Filmwellenleiter oder Koaxiallichtleitfaser)
nach Form, Abmessung und maximaler Brechzahldifferenz so gewählt und orientiert, daß die auszukoppelnden Wellen sich
nahezu mit Gaußscher Intensitäts- und Feldverteilung gut mit
der Intensitäts- und Feldverteilung der hier auf die enge
Strahltaille komprimierten Gaußschen Filmwelle deckten. Dadurch wird eine optimale Auskopplung gewährleistet.

Um Reflexionen und Streuungen der Filmwellen in der Bereichsgrenze des Filmwellenleiter-Dreiecks 4 möglichst niedrig zu
halten, kann man den aufgesetzten Film 11 im Bereich der Schenkel S1 und allmählich auslaufen lassen. Gleichzeitig ist es
auch möglich, kleine Reflexionen dadurch zu erhalten, daß
man den aufgesetzten Film 11 teilweise in den Filmwellenleiter 12 einläßt.

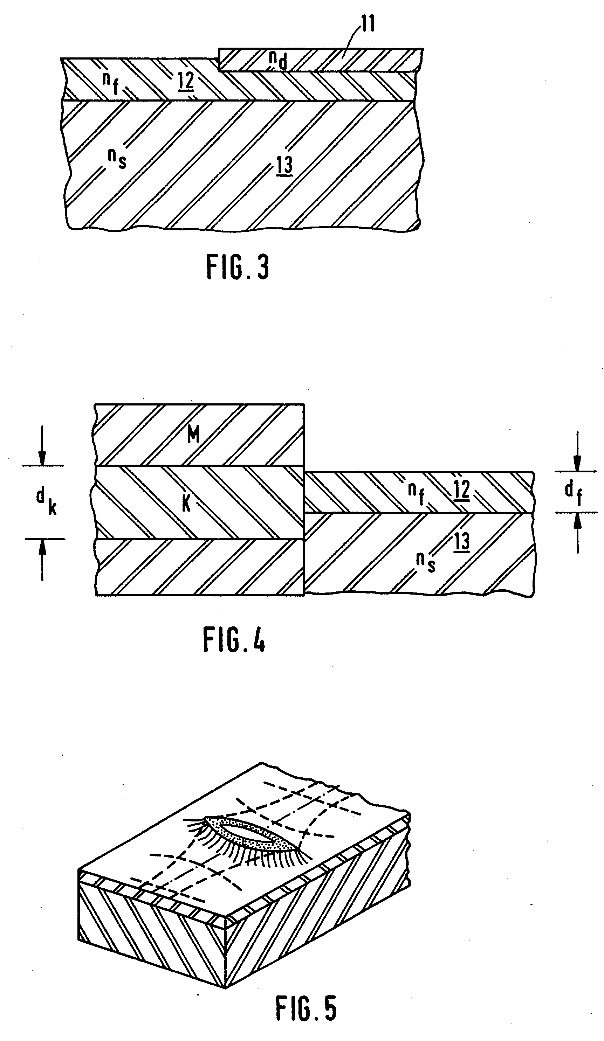

Die Ankopplung des Monomode-Lichtwellenleiters 1 soll so erfolgen, daß im Filmwellenleiter 2 dessen Grundwelle möglichst
optimal angeregt wird. Erreicht wird dies dadurch, daß, wie
in der Fig. 4 dargestellt, der mit einem Mantel M umgebene
Kern K der Faser 1 so angekoppelt ist, daß die Fasermitte
gegenüber der Mitte des Lichtwellenleiters 12 auf dem Substrat 13 nach unten verschoben ist. In Verbindung mit der
Wahl der Dicke $d_f$ des Filmwellenleiters 12, seiner Brechzahl
$n_f$ bezüglich der Substratbrechzahl $n_s$ und entsprechender
Wahl des Faserkerndurchmessers $d_k$ erreicht man, daß die Fasergrundwelle mit ihrer nahezu Gaußschen Intensitätsverteilung über dem Faserquerschnitt an die Filmgrundwelle mit ihrer ebenfalls etwa Gaußschen Intensitätsverteilung in der Ankoppelebene 3 gut angepaßt ist, so daß die Filmgrundwelle optimal angeregt werden kann.

- 1 -

Licentia Patent-Verwaltungs-GmbH          Z13 PTL-BK/Sch/ma
Theodor-Stern-Kai 1                       BK 81/75
D-6000 Frankfurt 70


Patentansprüche


1. Wellenlängen-Multiplexer oder -Demultiplexer für Lichtleitfasern, dadurch gekennzeichnet, daß eine Monomode-
   Lichtleitfaser (1) direkt mit einem einwelligen, planaren Filmwellenleiter (2) so gekoppelt (3) ist, daß in
   ihm die Grundwelle angeregt wird und daß diese Filmgrundwelle dem einen Schenkel (S1) eines stark dispersiv
   ausgebildeten Filmwellenleiter-Dreiecks (4) zur Umlenkung
   zugeführt wird und daß die, am anderen Schenkel (S2) dieses Filmwellenleiter-Dreiecks (4) austretenden, erneut
   im gleichen Sinn weiter umgelenkten Filmgrundwellen im
   Filmwellenleiter (2) weitergeführt werden und zur Auskopplung (5) der nunmehr räumlich getrennten Datenkanäle
   (6, 7, 8), die zusammen aus der eingangsseitigen Monomode-Lichtleitfaser (1) kommen, getrennten optischen
   Wellenleitern zugeführt werden (Fig. 1).


2. Anordnung nach Anspruch 1, dadurch gekennzeichnet, daß
   zwischen dem Filmwellenleiter-Dreieck (4) und der Einkoppelstelle (3) bzw. der Auskoppelstelle (5) je ein linsenförmiger Bereich (9, 10) angefügt ist (Fig. 1).

3. Anordnung nach Anspruch 2, <u>dadurch gekennzeichnet</u>, daß die linsenförmigen Bereiche (9, 10) durch geeignete Verdickung des Filmwellenleiters (2) realisiert sind.

4. Anordnung nach Anspruch 3, <u>dadurch gekennzeichnet</u>, daß die Linsen (9, 10) bikonvex ausgebildet sind.

5. Anordnung nach einem der vorhergehenden Ansprüche, <u>dadurch gekennzeichnet,</u> daß das Lichtwellenleiter-Dreieck (4) dadurch gebildet ist, daß auf dem planaren Filmwellenleiter (12) ein relativ dünner Film (11) mit einer Brechzahl ($n_d$ aufgebracht ist, die höher ist als die Brechzahl ($n_f$) des eigentlichen Films (12) (Fig. 2).

6. Anordnung nach einem der vorhergehenden Ansprüche 1 bis 4, <u>dadurch gekennzeichnet,</u> daß das Lichtwellenleiter-Dreieck 4 dadurch gebildet wird, daß der Filmwellenleiter 12 im Dreiecksbereich eine verringerte Dicke aufweist.

7. Anordnung nach Anspruch 5, <u>dadurch gekennzeichnet</u>, daß der aufgesetzte Film (11) im Bereich der Schenkel (S1, S2) nach außen abgeschrägt ist.

8. Anordnung nach Anspruch 6 oder 7, <u>dadurch gekennzeichnet,</u> daß der aufgesetzte Film (11) teilweise in den Filmwellenleiter (12) eingelassen ist (Fig. 3).

9. Anordnung nach einem der vorhergehenden Ansprüche, <u>dadurch gekennzeichnet,</u> daß die eingangsseitige Monomode-Lichtleitfaser (1) stumpf auf den planaren Lichtwellenleiter (2) aufgesetzt ist, wobei die Fasermitte gegenüber der Mitte des Lichtwellenleiters nach unten zum Filmsubstrat (13) hin versetzt angeordnet ist.

10. Anordnung nach Anspruch 9, dadurch gekennzeichnet, daß die Dicke ($d_f$) des Films (12), seine Brechzahl ($n_f$), die Brechzahl ($n_s$) des Subtrates (13) in Verbindung mit der versetzten Ankopplung der Monomode-Lichtleitfaser eine optimale Anregung der Filmgrundwellen ergibt.

11. Anordnung nach einem der vorhergehenden Ansprüche, dadurch gekennzeichnet, daß als optische Wellenleiter für die getrennten Datenkanäle (6, 7, 8) Lichtleitfasern Verwendung finden.

12. Anordnung nach einem der Ansprüche 1 bis 10, dadurch gekennzeichnet, daß optische Wellenleiter für die getrennten Datenkanäle (6, 7, 8) durch planare optische Streifenwellenleiter realisiert sind.

13. Anordnung nach einem der Ansprüche 1 bis 10, dadurch gekennzeichnet, daß optische Wellenleiter für die getrennten Datenkanäle (6, 7, 8) durch Rippenleiter realisiert sind.

14. Anordnung nach einem der Ansprüche 1 bis 10, dadurch gekennzeichnet, daß optische Wellenleiter für die getrennten Datenkanäle (6, 7, 8) durch Wulstleiter realisiert sind.

0073310

FIG.1

FIG.2

FIG.3

FIG.4

FIG.5

Europäisches
Patentamt

**EUROPÄISCHER RECHERCHENBERICHT**

0073310

Nummer der Anmeldung

EP 82 10 5368

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | --- <br> PATENTS ABSTRACTS, Band 5, Nr. 1(P-43)(673), 8th January 1981 & JP - A - 55 132 922 (NIPPON DENSHIN DENWA KOSHA) 16-10-1980 * Zusammenfassung * | 1,2,9, 11 | G 02 B 7/26 <br> H 04 J 15/00 |
| A | --- <br> 6TH CONFERENCE, MICROWAVE CONFERENCE PROCEEDINGS, 14.-17. September 1976 1976, Microwave Exhibitions and Publishers Ltd., Megaron Press Ltd., G.B. <br> R. ULRICH: "Optics of guides waves" * Zeilen 367-368; figuren 1-4 * | 1-7,10 | |
| A | --- <br> APPLIED OPTICS, Band 17, Nr. 6, 15. März 1978, Seiten 895-897 <br> J.T. BOYD et al.: "Optical coupling from fibers to channel waveguides formed on silicon" * Seite 895, Zeile 1 - Seite 897, Zeile 8; Figur 1 * | 1,9 | RECHERCHIERTE SACHGEBIETE (Int. Cl. 3) <br><br> G 02 B 7/00 <br> H 04 J 15/00 |
| A | --- <br> APPLIED OPTICS, Band 25, Nr. 3, Juli 1981, Seiten 201-210, Heidelberg, DE. <br> T. TAMIR: "Guided-wave methods for optical configurations" * Seite 202, Zeilen 36-43; Figur 1(c) * <br><br> ---      -/- | 5,8 | |

Der vorliegende Recherchenbericht wurde für alle Patentansprüche erstellt.

| Recherchenort | Abschlußdatum der Recherche | Prüfer |
|---|---|---|
| DEN HAAG | 05-11-1982 | BROCK T.J. |

Europäisches
Patentamt

**EUROPÄISCHER RECHERCHENBERICHT**

0073310

Nummer der Anmeldung

EP 82 10 5368

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | EDN MAGAZINE, Band 26, Nr. 3, Februar 1981, Seiten 73-74, Boston, Massachusetts, USA T. ORMOND: "Wavelength multiplex, demultiplex devices emerge from fiber-optic research" * Seite 73, Zeile 1 - Seite 74, Zeile 22; Figuren 1,2 * | 1,2,4, 11 | |
| | --- | | |
| A | IEEE JOURNAL OF QUANTUM ELECTRONICS, Band QE-13, Nr. 10, Oktober 1977, Seite 828 A. FENNER MILTON et al.: "Mode coupling in optical waveguide horns" * Seite 828, Zeilen 1-23; Figur 1 * | 1 | |
| | ----- | | RECHERCHIERTE SACHGEBIETE (Int. Cl. ³) |

Der vorliegende Recherchenbericht wurde für alle Patentansprüche erstellt.

| Recherchenort | Abschlußdatum der Recherche | Prüfer |
|---|---|---|
| DEN HAAG | 05-11-1982 | BROCK T.J. |